# EUROPÄISCHE PATENTSCHRIFT

(11) **EP 2 939 017 B1**
(45) Veröffentlichungstag und Bekanntmachung des Hinweises auf die Patenterteilung: **24.05.2017**
(21) Anmeldenummer: 13807962.9
(22) Anmeldetag: 09.12.2013
(51) Int. Cl.: G01N 29/24, G01N 29/26, G01N 29/04, B21C 51/00, B21B 38/00, B22D 11/16, G01N 29/06, G01N 29/44

(54) **STRANGGIESSVORRICHTUNG MIT DETEKTIERVORRICHTUNG ZUM DETEKTIEREN VON OBERFLÄCHENFEHLERN IN METALLURGISCHEN GIESSPRODUKTEN UND VERFAHREN**
CONTINUOUS CASTING DEVICE WITH DETECTING DEVICE FOR DETECTING SURFACE DEFECTS IN CAST METALLURGICAL PRODUCTS, AND METHOD
DISPOSITIF DE COULÉE CONTINUE POURVUE D'UN DISPOSITIF DE DÉTECTION POUR DÉTECTER DES DÉFAUTS DE SURFACE DANS DES PRODUITS MÉTALLURGIQUES COULÉS ET PROCÉDÉ

(30) Priorität: 27.12.2012 DE 102012224469; 28.08.2013 DE 102013217101
(43) Veröffentlichungstag der Anmeldung: 04.11.2015
(73) Patentinhaber: SMS group GmbH, 40237 Düsseldorf (DE)
(72) Erfinder: GUSAROVA, Tamara, 41812 Erkelenz (DE); SCHULZE, Stephan, 40668 Meerbusch (DE); RUNGE, Andreas, 42857 Remscheid (DE)
(74) Vertreter: Klüppel, Walter
(86) Internationale Anmeldenummer: PCT/EP2013/075906
(87) Internationale Veröffentlichungsnummer: WO 2014/102051

(56) Entgegenhaltungen:
- EP-A2- 2 196 800
- WO-A1-01/96040
- WO-A1-02/40986
- US-A- 4 853 634
- US-A1- 2003 150 587
- STACHURSKI M: "Modern ultrasonic transducers and methods for ultrasonic testing of materials", WELDING INTERNATIONAL, TAYLOR & FRANCIS, ABINGDON, GB, Bd. 22, Nr. 4, 1. April 2008 (2008-04-01), Seiten 218-224, XP001549817, ISSN: 0950-7116, DOI: 10.1080/09507110802121794

## Beschreibung

### Technisches Gebiet

Die vorliegende Erfindung betrifft eine Stranggießvorrichtung sowie ein Stranggießverfahren zur Produktion und/oder Inspektion von metallurgischen Gießprodukten, wobei die Stranggießvorrichtung eine Kokille zum Erzeugen von metallischen Gießprodukten umfasst.

### Stand der Technik

Stranggießen ist ein Verfahren sowohl zur diskontinuierlichen als auch kontinuierlichen Herstellung von Gießprodukten, wie Brammen, Blöcken, Knüppeln u. a. aus Eisen- oder Nichteisenlegierungen. Die Qualität der mittels Stranggießen erzeugten metallurgischen Gießprodukte hängt unter anderem auch von deren Oberflächenbeschaffenheit ab. Diese kann über Prozessparameter, wie zum Beispiel der Gießgeschwindigkeit oder der Kühlung eingestellt werden. Aus fertigungstechnischer Sicht ist es daher wünschenswert, quasi in Echtzeit die Prozessparameter an aktuelle Fertigungsbedingungen anzupassen. Die Einstellung der Prozessparameter in der Produktionslinie setzt eine Echtzeitprüfung des metallurgischen Gießproduktes voraus.

Eine derartige Echtzeitprüfung wird beispielsweise mittels CCD-Kameras zur optischen Prüfung der Oberflächenqualität der metallurgischen Produkte durchgeführt. Als Nachteil eines solchen optischen Verfahrens ist dessen niedrige laterale Auflösung zu nennen.

Ein weiteres Verfahren zur Prüfung der Oberflächenqualität von metallurgischen Gießprodukten zeigt die US 4,853,634. Dabei wird ein Wandler über die heiße Stranggussbramme bewegt, um Risse in der Oberfläche des Gießprodukts zu detektieren. Der Wandler basiert dabei auf dem Wirbelstromverfahren und ermittelt den Einfluss störender magnetischer Bereiche, wie zum Beispiel Bereiche, bestehend aus kaltem Oxidzunder. Ein Nachteil dieses Verfahrens liegt darin, dass die Prüfvorrichtung zur Prüfung der Oberflächenbeschaffenheit des Gießprodukts über das Gießprodukt hinweg bewegt werden muss.

Darüber hinaus ist in der US 2003/0150587 A1 eine Stranggießvorrichtung zum Herstellen von Walzgut beschrieben, welche mit einer Detektiereinrichtung zum Messen von Textur- und Kornstrukturen ausgerüstet ist, mittels welcher innerhalb des Walzgutes die Textur- und Kornstrukturen gemessen werden kann, um hierdurch Innenfehler im Walzgut zu detektieren. Eine Messung von Textur- unf Kornstrukturen kann unter anderem mittels eines EMAT-Sensors erfolgen.

In der WO 02/40986 A1 ist ein Apparat für eine zerstörungsfreie Prüfung von metallischen Strukturen beschrieben, welcher einen EMAT-Sensor zum Detektieren von Fehlstellen umfassen kann, wobei eine Markiereinrichtung vorgesehen ist, um die detektierten Schwachstellen zu markieren.

Ferner ist in der WO 01/96040 A1 ein Verfahren zum Markieren von Materialfehlern in oder auf einem stabförmigen Walzgut nach einem Verlassen eines Fertigwalzgerüsts beschrieben, bei welchem die Materialfehler mittels Ultraschalprüfung und/oder induktiver Prüfung detektiert werden.

Des Weiteren beschreibt die Druckschrift "STACHURSKI M: "Modern ultrasonic transducers and methods for ultrasonic testing of materials", WELDING INTERNATIONAL, TAYLOR & FRANCIS, ABINGDON, GB, Bd. 22, Nr. 4, 1. April 2008 (2008-04-01), Seiten 218-224, XP001549817, ISSN: 0950-7116, 001: 10.1080/09507110802121794" moderne Ultraschallwandler und Methoden zur Ultraschalluntersuchung von Materialien.

In der EP 2 196 800 A2 sind ein Verfahren und eine Vorrichtung zum Prüfen eines elektrisch leitfähigen Körpers mit einem EMAT-Sensor beschrieben, der als laufzeitgesteuerter Gruppenstrahler und/oder -empfänger betrieben wird, wobei sowohl Innen- als auch Oberflächenfehler detektierbar sind.

### Darstellung der Erfindung

Entsprechend ist es eine Aufgabe der vorliegenden Erfindung, eine Stranggießvorrichtung beziehungsweise ein Stranggießverfahren zur Produktion und/oder Inspektion von metallurgischen Gießprodukten anzugeben, wobei eine Erzeugung von metallurgischen Produkten mit weniger Ausschuss und damit effektiver erfolgen kann.

Diese Aufgabe wird mittels einer Vorrichtung mit den Merkmalen des Anspruchs 1 gelöst. Vorteilhafte Ausgestaltungen ergeben sich aus den Unteransprüchen.

Entsprechend umfasst eine Stranggießvorrichtung zur Produktion und/oder Inspektion von metallurgischen Gießprodukten eine Detektiervorrichtung zum Detektieren von Oberflächenfehlern und/oder oberflächennahen Fehlern in den metallurgischen Gießprodukten in der Produktionslinie. Erfindungsgemäß ist die Detektiervorrichtung mindestens ein als Gruppenstrahler ausgeführter EMAT (electromagnetic acoustic transducer) Sensor.

Ferner umfasst die Stranggießmaschine eine Auswerteeinheit zur Auswertung der mittels des EMAT-Sensors empfangenen Ultraschallsignale.

Darüber hinaus umfasst die Stranggießvorrichtung eine Steuereinheit zur Steuerung der Stranggießvorrichtung in Abhängigkeit von durch die Auswerteeinheit ermittelten Daten, um auf diese Weise Oberflächenfehlern und/oder oberflächennahen Fehlern entgegenzuwirken.

Durch die Auswertung der empfangenen Ultraschallsignale in der Auswerteeinheit kann der Zustand auf der Oberfläche und/oder den oberflächennahen Bereichen der metallurgischen Gießprodukte in Form von handhabbaren Daten dargestellt werden. Mittels einer entsprechenden Auswertesoftware lassen sich so Aussagen über Eigenschaften der Oberflächenfehler und/oder oberflächennahen Fehler, wie zum Beispiel Form, Größe und/oder Tiefe treffen. In ausgewerteter Form können die Daten dann beispielsweise einem Bediener der Stranggießvorrichtung auf entsprechenden Anzeigevorrichtungen angezeigt werden, so dass der Bediener in Abhängigkeit der angezeigten Daten in den Stranggießprozess eingreifen kann.

Durch die Weiterleitung der Daten der Auswerteeinheit an die Steuereinheit zur Steuerung der Stranggießvorrichtung können auf beziehungsweise in den metallurgischen Gießprodukten detektierte Oberflächenfehler und/oder oberflächennahe Fehler für die Steuerung beziehungsweise Regelung von Parametern der Stranggießvorrichtung berücksichtigt werden. So kann beispielsweise auch die Gießgeschwindigkeit der metallurgischen Produkte und/oder die Kühlung der metallurgischen Gießprodukte Einfluss genommen werden, um auf diese Weise Oberflächenfehlern und/oder oberflächennahen Fehlern entgegenzuwirken. Folglich können die Prozessparameter noch in der Produktionslinie an die mittels des EMAT-Sensors in Verbindung mit der Auswerteeinheit ermittelten Daten angepasst werden.

Ein EMAT Sensor besteht aus einem Magneten und einer oder mehreren Spulen. Bei dem Magneten kann es sich um einen Permanentmagneten oder einen Elektromagneten handeln, welcher ein statisches oder ein quasi statisches Magnetfeld erzeugt. Die Spule wird mit einem Wechselstrom beaufschlagt, so dass neben dem Magneten auch die Spule ein Magnetfeld erzeugt. Dabei kommt es zu einer Überlagerung beider Magnetfelder unterhalb des EMAT Sensors. Wird nun in einem Prüfvorgang der Magnet samt der Spule über einem Prüfkörper angeordnet, so werden durch Interagieren des Magnetfelds des Magneten mit dem Magnetfeld der Spule in dem Prüfkörper Ultraschallwellen erzeugt.

Ein Gruppenstrahler besteht aus mehreren Einzelstrahlern beziehungsweise Wandlern, welche sowohl Ultraschallwellen senden als auch empfangen können.

Die Prüfung mittels eines EMAT Sensors erfolgt entsprechend ohne Kontakt zum Prüfkörper. Folglich werden zur Prüfung auch keine Zusatzmittel wie zum Beispiel Kopplungsmittel benötigt. Daher ist der Einsatzbereich des EMAT Sensor weder durch Gefrier- noch Siedepunkt beschränkt. Des Weiteren ergeben sich auch geringere Anforderungen an die Oberflächenbeschaffenheit der Prüfkörper. Da kein Kopplungsmittel aufgetragen wird ist eine glatte Oberfläche nicht erforderlich. Es müssen lediglich lose Zunderrückstände entfernt werden.

Gießprodukte im Sinne der Erfindung sind Produkte, wie Brammen, Blöcke, Knüppel u. a. aus Eisen- oder Nichteisenlegierungen.

In einer weiter bevorzugten Ausführungsform ist der EMAT-Sensor als unbeweglicher beziehungsweise stationärer Teil der Stranggießvorrichtung ausgeführt.

Dadurch weist die Prüfvorrichtung keine mechanisch bewegliche, insbesondere schwenkbare Komponente auf, was sich positiv auf die dadurch reduzierte Komplexität der Prüfvorrichtung auswirkt und damit auch die Fehleranfälligkeit reduziert werden kann.

In einer bevorzugten Ausführungsform ist der EMAT-Sensor zur Abgabe einer Ultraschallwellenfront ausgebildet.

Dadurch können Prüfkörper beziehungsweise metallurgische Gießprodukte mittels Ultraschallwellen durchströmt werden. Entsprechend interagieren die Oberflächenfehler und/oder die oberflächennahen Fehler mit den Ultraschallwellen beziehungsweise der Ultraschallwellenfront.

In einer weiter bevorzugten Ausführungsform sind die Richtung und die Fokustiefe der durch den EMAT-Sensor erzeugbaren Ultraschallwellenfront elektronisch einstellbar.

Dabei ist unter Fokustiefe ein Tiefenbereich gemeint, in dem die Fokussierung der Ultraschallwellenfront maximal ist. Durch die Möglichkeit der Einstellung der Fokustiefe können metallurgische Gießprodukte, ausgehend von ihrer Oberfläche, bis in eine gewisse Tiefe auf Fehler geprüft werden. So ist es beispielsweise möglich, die Prüfung eines metallurgischen Produkts auf eine kritische Tiefe, in welcher bevorzugt Fehler zu erwarten sind, zu konzentrieren.

Durch die Einstellbarkeit der Richtung der Ultraschallwellenfront kann in Verbindung mit der Einstellbarkeit der Fokustiefe der Ultraschallwellenfront das metallurgische Gießprodukt dreidimensional abgetastet werden. Auf diese Weise können Fehler in dem metallurgischen Gießprodukt detektiert werden, welche nur durch Bestrahlung mit Ultraschallwellen unter einem bestimmten Winkel erfasst werden können. Insgesamt sind dadurch die Anforderung an eine mechanische Verschwenkbarkeit der Vorrichtung zum Detektieren von Oberflächenfehlern und/oder oberflächennahen Fehlern obsolet.

In einer bevorzugten Ausführungsform ist der EMAT-Sensor zum Empfangen von Ultraschallsignalen ausgebildet, welche aus Reflexionen der Ultraschallwellenfront an den metallurgischen Gießprodukten hervorgehen.

Dadurch, dass der EMAT-Sensor Ultraschallwellen sowohl senden als auch empfangen kann, werden keine zusätzlichen Empfangswandler benötigt. Dies wirkt sich positiv auf die Komplexität beziehungsweise die Baugröße der Vorrichtung zum Detektieren von Oberflächenfehlern und/oder oberflächennahen Fehlern aus.

In einer weiter bevorzugten Ausführungsform umfasst die Stranggießvorrichtung eine Vorrichtung zur Reinigung der Oberfläche der metallurgischen Gießprodukte.

Dadurch können produktionsbedingte Rückstände, wie zum Beispiel loser Zunder, auf der Oberfläche der metallurgischen Gießprodukte beseitigt werden, so dass die Detektion von Oberflächenfehlern und/oder oberflächennahen Fehlern durch derartige Rückstände nicht beeinflusst beziehungsweise behindert wird. Darüber hinaus ist eine Anordnung des EMAT-Sensors über den metallurgischen Gießprodukten mit geringem Abstand möglich, ohne dass dabei der EMAT-Sensor durch produktionsbedingte Rückstände verschmutzt wird. Des Weiteren dient die Reinigung auch der Vorbereitung für weitere nachfolgende Prozessschritte der Stranggießvorrichtung.

In einer weiteren Ausführungsform umfasst die Stranggießvorrichtung eine Markiervorrichtung zum Markieren der Oberflächenfehler und/oder oberflächennahen Fehler auf den metallurgischen Gießprodukten.

Dadurch ist es möglich, Oberflächenfehler und/oder oberflächennahe Fehler optisch zu kennzeichnen. Entsprechend markierte Bereiche der metallurgischen Gießprodukte können dann in einem Nachgang einer zusätzlichen Behandlung unterzogen werden.

In einer weiter bevorzugten Ausführungsform umfasst die Stranggießvorrichtung eine Schneidvorrichtung zum Schneiden der metallurgischen Gießprodukte.

Dadurch können die metallurgischen Gießprodukte auf eine gewünschte Länge zugeschnitten werden. Darüber hinaus können Teile des metallurgischen Materials, für welche mittels des EMAT-Sensors zuvor eine kritische Anzahl beziehungsweise ein kritisches Ausmaß an Oberflächenfehlern und/oder oberflächennahen Fehlern detektiert wurde, mit Hilfe der Schneidvorrichtung in Form von Ausschuss abgeschnitten werden.

Kumulativ kann die Stranggießvorrichtung eine Steuereinheit zur Steuerung der Markiervorrichtung und/oder der Schneidvorrichtung in Abhängigkeit von durch die Auswerteeinheit ermittelten Daten umfassen.
Die Steuerung der Markiervorrichtung in Abhängigkeit der von der Auswerteeinheit ermittelten Daten ermöglicht eine exakte Markierung der Oberflächenfehler und/oder der oberflächennahen Fehler auf der Oberfläche der metallurgischen Gießprodukte.

Für den Fall, dass ein Teil der metallurgischen Produkte aufgrund der Überschreitung einer kritischen Anzahl an Oberflächenfehlern und/oder oberflächennahen Fehlern abgetrennt werden soll, kann die Schneidvorrichtung unmittelbar von der mit der Auswerteeinheit verbundenen Steuereinheit gesteuert werden. Alternativ kann die Schneidvorrichtung auch in Abhängigkeit der durch die Markiervorrichtung auf der Oberfläche der metallurgischen Produkte erzeugten Markierungen gesteuert werden.

In einer weiter bevorzugten Ausführungsform ist die elektronische Einstellung der Richtung und Fokustiefe der Ultraschallwellenfront von der Temperatur der metallurgischen Gießprodukte abhängig. Dabei umfasst die Vorrichtung zum Detektieren von Oberflächenfehlern und/oder oberflächennahen Fehlern einen Temperatursensor zum Messen der Temperatur der metallurgischen Gießprodukte.

Dadurch kann der Einfluss der Temperatur auf die mittels des EMAT-Sensors ermittelten Daten/Ergebnisse berücksichtigt werden. Somit ist eine gleichbleibende Prüfqualität unabhängig von der Temperatur der metallurgischen Gießprodukte gewährleistet.

Es ist weiterhin Aufgabe der vorliegenden Erfindung, ein Stranggießverfahren zur Produktion von metallurgischen Gießprodukten, wobei das Stranggießverfahren ein Verfahren zum Detektieren von Oberflächenfehlern und/oder oberflächennahen Fehlern bei der Produktion von metallurgischen Gießprodukten in der Produktionslinie umfasst, bevorzugt mittels einer Stranggießvorrichtung gemäß einem der Ansprüche 1 bis 9, anzugeben. Diese Aufgabe wird durch ein Verfahren mit den Merkmalen des Anspruchs 10 gelöst. Vorteilhafte Ausgestaltungen dieses Verfahrens ergeben sich aus den Unteransprüchen.

Mit Hilfe des Verfahrens werden die oben dargestellten Vorteile erreicht.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: schematisch eine Ansicht einer Stranggießvorrichtung zur Produktion und/oder Inspektion von metallurgischen Gießprodukten,
- Figur 2: schematisch ein Blockschaltbild einer Stranggießvorrichtung zur Produktion und/oder Inspektion von metallurgischen Gießprodukten.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente mit identischen Bezugszeichen bezeichnet und auf eine wiederholte Beschreibung dieser Elemente wird in der nachfolgenden Beschreibung teilweise verzichtet, um Redundanzen zu vermeiden.

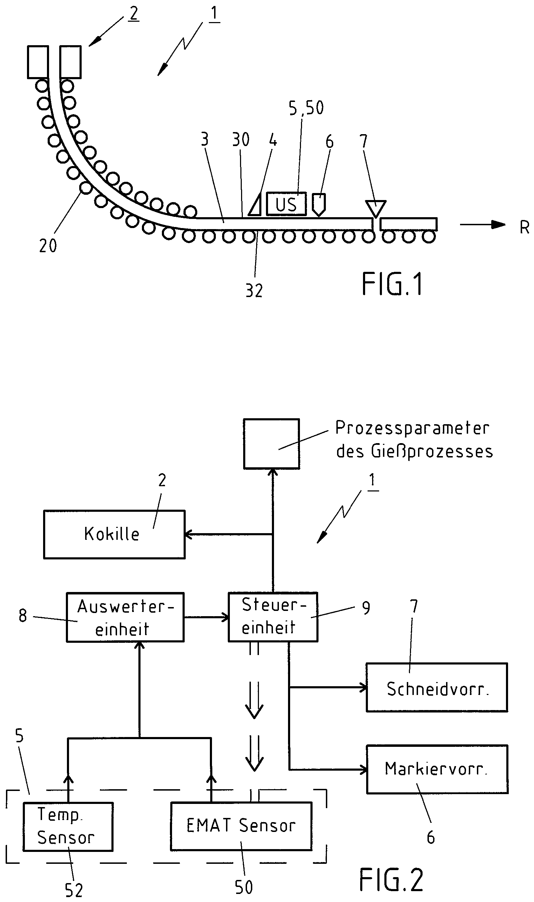

Figur 1 zeigt eine Stranggießvorrichtung 1 zur Produktion von metallurgischen Gießprodukten 3, nachfolgend auch metallurgisches Material genannt. Das metallurgische Material 3 verlässt dabei die Kokille 2 senkrecht nach unten und wird durch zumindest teilweise angetriebene Rollen 20 in Gießrichtung R in die Horizontale umgelenkt. Nach erfolgreicher Umlenkung passiert das metallurgische Material 3 eine Detektiervorrichtung 5 zum Detektieren von Oberflächenfehlern und/oder oberflächennahen Fehlern. Bei der Detektiervorrichtung 5 handelt es sich um einen als Gruppenstrahler ausgeführten EMAT-Sensor 50, welcher unmittelbar, jedoch berührungsfrei über dem metallurgischen Material 3 angeordnet ist. Dabei ist der EMAT-Sensor 50 in der Lage, mittels Ultraschallwellen Oberflächenfehler und/oder oberflächennahe Fehler in dem metallurgischen Gießprodukt 3 zu detektieren.

Darüber hinaus zeigt Figur 1 eine Reinigungsvorrichtung 4, welche sich in dem horizontalen Bereich der Stranggießvorrichtung befindet. Die Reinigungsvorrichtung 4 reinigt die Oberseite 30 des metallurgischen Gießprodukts 3 und bereitet diese somit auf die nachfolgenden Verfahrensschritte vor. Dabei fungiert die Reinigungsvorrichtung 4 z. B. in Form eines Zunderwäschers, indem sie Verunreinigungen in Form von Eisenoxid auf der Oberfläche des metallurgischen Materials 3 z. B. mittels hohen Wasserdrucks entfernt. Dazu weist die Reinigungsvorrichtung 4 in Richtung der Breite des metallurgischen Gießproduktes 3 eine Vielzahl an Düsen auf, welche auf die Oberfläche des metallurgischen Gießprodukts 3 gerichtet sind. Alternativ kann die Oberfläche des metallurgischen Gießprodukts 3 mit Pressluft oder durch Abbürsten gereinigt werden. Die Detektiervorrichtung 5 ist dabei der Reinigungsvorrichtung 4 nachgeschaltet, so dass das metallurgische Gießprodukt 3 die Reinigungsvorrichtung 4 bereits passiert hat, wenn es die Detektiervorrichtung 5 erreicht.

Die Detektiervorrichtung 5 ist auf die Oberseite 30 des metallurgischen Gießprodukts 3 gerichtet, derart, dass die gesamte Breite der Oberseite 30 des metallurgischen Gießprodukts 3 von der Detektiervorrichtung 5 erfasst werden kann. Alternativ kann die Detektiervorrichtung 5 auf die Unterseite 32 des Gießprodukts gerichtet werden bzw. zur Inspektion von allen Seiten des metallurgischen Gießprodukts 3 eingesetzt werden.

Die Detektiervorrichtung 5 wird in ihrem Kern von einem EMAT Sensor 50 gebildet.

Eine Einheit, bestehend aus Magnet und Spule, wird als Einzelstrahler bezeichnet. Die durch einen Einzelstrahler in dem metallurgischen Gießprodukt 3 hervorgerufenen Ultraschallwellen besitzen eine Hauptausbreitungsrichtung, welche in Dickenrichtung des metallurgischen Gießprodukts 3 verläuft. Bei dem in Figur 1 gezeigten EMAT Sensor 50 handelt es sich jedoch um einen Gruppenstrahler beziehungsweise einen phased array, welcher mindestens zwei, bevorzugt 16, besonders bevorzugt 32 oder ganz besonders bevorzugt 64 Einzelstrahler aufweist. Mit Hilfe eines solchen Gruppenstrahlers ist es möglich, ein ganzes Ultraschallbündel zu erzeugen. Dabei kann die Abstrahlrichtung des Ultraschallbündels durch einen zeitlichen Versatz der Abgabe der Ultraschallwellen der Einzelstrahlen untereinander verändert werden. Entsprechend kann die Abstrahlrichtung des Ultraschallwellenbündels des Gruppenstrahlers des EMAT Sensors 50 aus Figur 1 durch eine elektronische Ansteuerung der Einzelstrahler geschwenkt werden.

Das Prinzip, nach welchem durch die Interaktion der Magnetfelder von Magnet und Spule eines Einzelstrahlers in einem metallurgischen Material Ultraschallwellen erzeugt werden, hängt von der Beschaffenheit des metallurgischen Gießprodukts selbst ab. Handelt es sich bei dem metallurgischen Gießprodukt um ein leitfähiges Material, so werden die Ultraschallwellen in dem metallurgischen Gießprodukt aufgrund des Prinzips der Lorenzkraft erzeugt. Handelt es sich bei dem metallurgischen Gießprodukt um ein ferromagnetisches Material, so kann die Bildung der Ultraschallwellen in dem metallurgischen Gießprodukt auf dem Prinzip der Magnetostriktion beruhen.

Die für den EMAT Sensor 50 in Figur 1 verwendeten Spulen sind aus Wolfram gefertigt, um hohen Temperaturen des metallurgischen Gießprodukts 3 standzuhalten. Alternativ können die Spulen auch aus Molybdän, Platin oder dergleichen bestehen. Die in dem EMAT Sensor 50 eingesetzten Magnete weisen eine möglichst hohe Curiertemperatur auf, um auch bei hohen Temperaturen des metallurgischen Gießprodukts 3 einsatzfähig zu sein.

Die durch den als Gruppenstrahler ausgeführten EMAT Sensor 50 in dem metallurgischen Gießprodukt 3 erzeugten Ultraschallwellen werden von Oberflächenfehlern und/oder oberflächennahen Fehlern reflektiert. Durch die beschriebene elektronische Verschwenkbarkeit der Ultraschallwellen in Form eines Ultraschallwellenbündels in Verbindung mit der Möglichkeit, eine Tiefenfokussierung der Ultraschallwellen einzustellen, ist es möglich ein dreidimensionales Abbild der Oberflächenfehler und/oder oberflächennahen Fehler in Form eines Ultraschallsignals mittels des EMAT Sensors 50 zu detektieren.

Figur 1 zeigt weiterhin, dass die Stranggießvorrichtung 1 unmittelbar nach der Detektiervorrichtung 5 eine Markiervorrichtung 6 aufweist.

Mittels der Markiervorrichtung 6 werden die durch die Detektiervorrichtung zuvor ermittelten Oberflächenfehler und/oder oberflächennahen Fehler auf der Oberseite 30 des metallurgischen Gießprodukts 3 markiert. Darüber hinaus kann mittels der Markiervorrichtung auch eine Schneidkante markiert werden, an welcher das metallurgische Gießprodukt 3 in einem folgenden Verfahrensschritt getrennt werden soll.

Die Reinigungsvorrichtung 4, die Detektiervorrichtung 5 sowie die Markiervorrichtung 6 sind in der Höhe verstellbar angeordnet. Auf diese Weise können sie in Abhängigkeit der Dicke des zu fertigenden metallurgischen Gießprodukts 3 in der Höhe verstellt werden.

Darüber hinaus zeigt Figur 1 eine Schneidvorrichtung 7, welche der Markiervorrichtung 6 nachgeschaltet ist und einem optimierten Zuschnitt des Gießprodukts dient.

Figur 2 zeigt schematisch ein Blockschaltbild der Stranggießvorrichtung 1 aus Figur 1. Der EMAT Sensor 50 wandelt die detektierten Ultraschallsignale in Daten um, welche von einer Auswertesoftware auf der Auswerteeinheit 8 verarbeitet werden können.

Die Detektiervorrichtung 5 weist neben dem EMAT Sensor 50 einen Temperatursensor 52 auf, welcher die Temperatur des metallurgischen Gießproduktes 3 misst. Die Messdaten des Temperatursensors 52 werden an die Auswerteeinheit 8 übertragen und dort von der Auswertesoftware verarbeitet. Die Auswerteeinheit 8 leitet ihre Ergebnisse auf Basis der Messdaten des Temperatursensors 52 bei Bedarf an eine Steuereinheit 9 weiter. Die Steuereinheit 9 beeinflusst dann die Inspektionsparameter, wie z. B. die Frequenz, mittels welcher der EMAT Sensor 50 in dem metallurgischen Gießprodukt 3 Ultraschallwellen erzeugt. Dadurch ist es möglich, die Inspektionsparameter der Ultraschallwellen derart an die Temperatur des metallurgischen Gießprodukts 3 anzupassen, so dass Oberflächenfehler und/oder oberflächennahe Fehler optimal detektiert werden können.

Nachdem die Auswerteeinheit 8 die Daten des EMAT Sensors 50 verarbeitet hat, leitet sie bei Bedarf Befehle an die Steuereinheit 9 weiter, um Prozessparameter zu steuern. Beispielsweise kann die Kühlung des Gießprodukts bzw. die Gießgeschwindigkeit geregelt werden, um die Oberflächenbeschaffenheit des metallurgischen Gießprodukts 3 zu beeinflussen und somit auf mittels des EMAT Sensors 50 detektierte Oberflächenfehler und/oder oberflächennahe Fehler zu reagieren.

Darüber hinaus ist die Steuereinheit 9 mit der Markiervorrichtung 6 verbunden. Abhängig von den Daten der Auswerteeinheit 8 veranlasst die Steuereinheit 9 die Markiervorrichtung 6 das metallurgische Gießprodukt 3 auf dessen Unter- oder Oberseite 32 bzw. 30 an den Stellen zu markieren, an welchen der EMAT Sensor 50 zuvor Oberflächenfehler und/oder oberflächennahe Fehler detektiert hat.

Des Weiteren können mittels der Markiervorrichtung 6 Trennlinien auf die Oberseite 30 des metallurgischen Gießprodukts 3 gedruckt werden, anhand welcher sich im Anschluss die Schneidvorrichtung 7 orientiert.

Abhängig von den Daten der Auswerteeinheit 8 kann die Steuereinheit 9 die Schneidvorrichtung 7 dazu veranlassen, einen Teil des metallurgischen Gießprodukts 3 abzutrennen, in welchem der EMAT Sensor 50 eine Menge an Oberflächenfehlern und/oder oberflächennahen Fehlern detektiert hat, die eine kritische Anzahl an Fehlern überschreitet. Die kritische Anzahl an Fehlern ist dabei in der Auswertesoftware der Auswerteeinheit 8 hinterlegt.

Alternativ kann die Schneidvorrichtung 7 auch einen optischen Sensor zum Erfassen einer mittels der Markiervorrichtung 6 erzeugten Trennlinie auf der Oberseite 30 des metallurgischen Gießprodukts 3 aufweisen. Erkennt der optische Sensor der Schneidvorrichtung 7 eine Trennlinie auf der Oberseite 30 des metallurgischen Gießprodukts 3, so löst er einen Schneidvorgang der Schneidvorrichtung 7 entlang der Trennlinie aus.

Soweit anwendbar können alle einzelnen Merkmale, die in den einzelnen Ausführungsbeispielen dargestellt sind, miteinander kombiniert und/oder ausgetauscht werden, ohne den Bereich der Erfindung zu verlassen.

### Bezugszeichenliste

- 1: Stranggießvorrichtung

- 2: Kokille
- 20: Rollen

- 3: (Metallurgisches) Gießprodukt
- 30: Oberseite
- 32: Unterseite

- 4: Reinigungsvorrichtung

- 5: Detektiervorrichtung
- 50: EMAT Sensor (Gruppenstrahler)
- 52: Temperatur Sensor

- 6: Markiervorrichtung

- 7: Schneidvorrichtung

- 8: Auswerteeinheit

- 9: Steuereinheit

## Patentansprüche

1. Stranggießvorrichtung (1) zur Produktion und/oder Inspektion von metallurgischen Gießprodukten (3) mit einer Kokille (2) zum Erzeugen von metallurgischen Gießprodukten (3),
**gekennzeichnet, durch** eine mindestens einen als Gruppenstrahler ausgeführten EMAT-Sensor (50) umfassende Oberflächenfehler-Detektiervorrichtung (5), um Oberflächenfehler und/oder oberflächennahe Fehler in den metallurgischen Gießprodukten (3) in der Produktionslinie zu detektieren, und
eine Auswerteeinheit (8) zur Auswertung von mittels des EMAT-Sensors (50) empfangenen Ultraschallsignale und
eine Steuereinheit (9) zur Steuerung der Stranggießvorrichtung (1) in Abhängigkeit von **durch** die Auswerteeinheit (8) ermittelten Daten, um auf diese Weise Oberflächenfehlern und/oder oberflächennahen Fehlern entgegenzuwirken.

2. Stranggießvorrichtung (1) gemäß Anspruch 1, **dadurch gekennzeichnet, dass** der EMAT Sensor (50) als unbeweglicher Teil der Stranggießvorrichtung (1) ausgeführt ist.

3. Stranggießvorrichtung (1) gemäß Anspruch 1 oder 2, **dadurch gekennzeichnet, dass** die Richtung und Fokustiefe der durch den EMAT Sensor (50) erzeugbaren Ultraschall-Wellenfront elektronisch einstellbar ist.

4. Stranggießvorrichtung (1) gemäß einem der vorhergehenden Ansprüche, **dadurch gekennzeichnet, dass** der EMAT Sensor (50) zum Empfangen von Ultraschallsignalen ausgebildet ist, welche aus Reflektionen der Ultraschall-Wellenfront an den metallurgischen Gießprodukten (3) hervorgehen.

5. Stranggießvorrichtung (1) gemäß einem der vorhergehenden Ansprüche, **dadurch gekennzeichnet, dass** die Stranggießvorrichtung (1) eine Reinigungsvorrichtung (4) zur Reinigung der Oberfläche der metallurgischen Gießprodukte (3) umfasst.

6. Stranggießvorrichtung (1) gemäß einem der vorhergehenden Ansprüche, **dadurch gekennzeichnet, dass** die Stranggießvorrichtung (1) eine Markiervorrichtung (6) zum Markieren der Oberflächenfehler und/oder oberflächennahen Fehler auf den metallurgischen Gießprodukten (3) umfasst.

7. Stranggießvorrichtung (1) gemäß einem der vorhergehenden Ansprüche, **dadurch gekennzeichnet, dass** die Stranggießvorrichtung (1) eine Schneidvorrichtung (7) zum Schneiden der metallurgischen Gießprodukten (3) umfasst.

8. Stranggießvorrichtung (1) gemäß einem der vorhergehenden Ansprüche, **dadurch gekennzeichnet, dass** die Stranggießvorrichtung eine Steuereinheit (9) zur Steuerung einer Markiervorrichtung (6) und/oder einer Schneidvorrichtung (7) in Abhängigkeit von durch die Auswerteeinheit (8) ermittelten Daten, umfasst.

9. Stranggießvorrichtung (1) gemäß einem der vorhergehenden Ansprüche, **dadurch gekennzeichnet, dass** die Detektiervorrichtung (5) zum Detektieren von Oberflächenfehlern und/oder oberflächennahen Fehlern einen Temperatursensor (52) zum Messen der Temperatur der metallurgischen Gießprodukte (3) umfasst.

10. Stranggießverfahren zur Produktion von metallurgischen Gießprodukten (3), bei welchem die metallurgischen Gießprodukten (3) eine Kokille (2) einer Stranggießvorrichtung (1) verlassen, wobei das Stranggießverfahren ein Verfahren zum Detektieren von Oberflächenfehlern und/oder oberflächennahen Fehlern bei der Produktion von metallurgischen Gießprodukten (3) in der Produktionslinie umfasst,
die folgenden Schritte umfassend:
Aussenden einer Ultraschall-Wellenfront mittels eines unbeweglichen EMAT Sensors (50), wobei die Richtung und Fokustiefe der Ultraschall-Wellenfront elektronisch eingestellt werden können,
Empfangen eines Ultraschallsignals, welches durch Reflektion der Ultraschall-Wellenfront an dem zu prüfenden metallurgischen Gießprodukt (3) erzeugt wird,
Auswerten des empfangenen Ultraschallsignals bezüglich der Oberflächenfehler und/oder der oberflächennahen Fehler, wobei
in Abhängigkeit von der Auswertung Prozessparameter der Stranggießvorrichtung (1) beeinflusst werden, um auf diese Weise Oberflächenfehlern und/oder oberflächennahen Fehlern entgegenzuwirken.

11. Verfahren gemäß Anspruch 10, **dadurch gekennzeichnet, dass** in Abhängigkeit von der Auswertung
Oberflächenfehler und/oder oberflächennahe Fehler auf den metallurgischen Gießprodukten (3) von einer Markiervorrichtung (6) markiert werden, und/oder
die metallurgischen Gießprodukte (3) von einer Schneideinheit (7) geschnitten werden.

12. Verfahren gemäß Anspruch 10 oder 11, **dadurch gekennzeichnet, dass** die Oberfläche eines metallurgischen Gießprodukts (3) vor einer Ultraschallprüfung durch den EMAT Sensor (50) mittels einer Reinigungsvorrichtung (4) zur Reinigung der Oberfläche gereinigt wird.

13. Verfahren gemäß Anspruch 10 bis 12, **dadurch gekennzeichnet, dass** der Temperatureinfluss auf Ultraschallergebnisse berücksichtigt wird.

14. Verfahren gemäß einem der Ansprüche 10 bis 13, **dadurch gekennzeichnet, dass** von dem Gießprodukt zumindest ein Teil seiner gesamten Oberfläche überprüft wird.

15. Verfahren gemäß einem der Ansprüche 10 bis 14, **dadurch gekennzeichnet, dass** eine Bewertung der Qualität des Gießprodukts automatisch anhand der Inspektionsergebnisse erfolgt.

## Claims

1. Continuous casting device (1) for production and/or inspection of metallurgical cast products (3), wherein the continuous casting device (1) comprises a mould (2) for producing metallurgical cast products (3),
**characterised by** a surface-fault detecting device (5), which comprises at least one EMAT sensor (50) formed as an array emitter, for detection of surface faults and/or faults near the surface in the metallurgical cast products (3) in the production line,
an evaluating unit (8) for evaluation of ultrasonic signals received by means of the EMAT sensor (50) and
a control unit (9) for controlling the continuous casting device (1) in dependence on data determined by the evaluating unit (8) so as in this way to counteract surface faults and/or faults near the surface.

2. Continuous casting device (1) according to claim 1, **characterised in that** the EMAT sensor (50) is constructed as a non-movable part of the continuous casting device (1).

3. Continuous casting device (1) according to claim 2, **characterised in that** the direction and focal depth of the ultrasonic wave front able to be generated by the EMAT sensor (50) are electronically settable.

4. Continuous casting device (1) according to any one of the preceding claims, **characterised in that** the EMAT sensor (50) is constructed for receiving ultrasonic signals emanating from reflections of the ultrasonic wave front at the metallurgical cast products (3).

5. Continuous casting device (1) according to any one of the preceding claims, **characterised in that** the continuous casting device (1) comprises a cleaning device (4) for cleaning the surface of the metallurgical cast products (3).

6. Continuous casting device (1) according to any one of the preceding claims, **characterised in that** the continuous casting device (1) comprises a marking device (6) for marking surface faults and/or faults near the surface on the metallurgical cast products (3).

7. Continuous casting device (1) according to any one of the preceding claims, **characterised in that** the continuous casting device (1) comprises a cutting device (7) for cutting the metallurgical cast products (3).

8. Continuous casting device (1) according to any one of the preceding claims, **characterised in that** the continuous casting device (1) comprises a control unit (9) for controlling a marking device (6) and/or a cutting device (7) in dependence on data determined by the evaluating unit (8).

9. Continuous casting device (1) according to any one of the preceding claims, **characterised in that** the detecting device (5) for detection of surface faults and/or faults near the surface comprises a temperature sensor (52) for measuring the temperature of the metallurgical cast products (3).

10. Continuous casting method for production of metallurgical cast products (3), in which the metallurgical cast products (3) leave a mould (2) of a continuous casting device (1), wherein the continuous casting method comprises a method for detection of surface faults and/or faults near the surface in the production of metallurgical cast products (3) in the production line, comprising the following steps:
emitting an ultrasonic wave front by means of a non-movable EMAT sensor (50), wherein the direction and focal depth of the ultrasonic wave front can be electronically set,
receiving an ultrasonic signal generated by reflection of the ultrasonic wave front at the metallurgical cast product (3) to be investigated, and
evaluating the received ultrasonic signal with respect to surface faults and/or faults near the surface, wherein
process parameters of the continuous casting device (1) are influenced in dependence on the evaluation so as to in this way counteract surface faults and/or faults near the surface.

11. Method according to claim 10, **characterised in that** in dependence on the evaluation
surface faults and/or faults near the surface are marked on the metallurgical cast products (3) by a marking device (6) and/or
the metallurgical cast products (3) are cut by a cutting unit (7).

12. Method according to claim 10 or 11, **characterised in that** prior to ultrasonic investigation by the EMAT sensor (50) the surface of a metallurgical cast product (3) is cleaned by means of a cleaning device (4) for cleaning the surface.

13. Method according to any one of claims 10 to 12, **characterised in that** temperature influence on ultrasonic results is taken into consideration.

14. Method according to any one of claims 10 to 13, **characterised in that** of the cast product at least a part of its entire surface is investigated.

15. Method according to any one of claims 10 to 14, **characterised in that** evaluation of the quality of the cast product is carried out automatically on the basis of the inspection results.

## Revendications

1. Dispositif de coulée continue (1) pour la production et/ou l'inspection de produits de fonderie métallurgique (3) avec une lingotière (2) pour fabriquer des produits de fonderie métallurgique (3),
**caractérisé par** au moins un dispositif de détection de défauts de surface (5) comprenant au moins un capteur EMAT à réseau phasé, afin de détecter des défauts de surface et/ou des défauts à proximité de la surface de produits de fonderie métallurgique (3) dans la ligne de production, et
une unité d'évaluation (8) pour l'évaluation de signaux ultrasonores reçus au moyen du capteur EMAT (50) ; et
une unité de commande (9) pour commander le dispositif de coulée continue (1) en fonction de données déterminées par l'unité d'évaluation (8) pour ainsi contrer les défauts de surface et/ou les défauts à proximité de la surface.

2. Dispositif de coulée continue (1) selon la revendication 1, **caractérisé en ce que** le capteur EMAT (50) est réalisé en tant que partie fixe de la coulée continue (1).

3. Dispositif de coulée continue (1) selon la revendication 1 ou 2, **caractérisé en ce que** la direction et la profondeur de mise au point du front d'onde ultrasonique généré par le capteur EMAT (50) sont réglables électroniquement.

4. Dispositif de coulée continue (1) selon l'une des revendications précédentes, **caractérisé en ce que** le capteur EMAT (50) est configuré pour recevoir des signaux ultrasoniques, qui résultent de réflexions du front d'onde ultrasonique sur les produits de fonderie métallurgique (3).

5. Dispositif de coulée continue (1) selon l'une des revendications précédentes, **caractérisé en ce que** le dispositif de coulée continue (1) comprend un dispositif de nettoyage (4) destiné à nettoyer la surface des produits de fonderie métallurgique (3).

6. Dispositif de coulée continue (1) selon l'une des revendications précédentes, **caractérisé en ce que** le dispositif de coulée continue (1) comprend un dispositif de marquage (6) pour le marquage des défauts de surface et/ou des défauts proches de la surface sur les produits de fonderie métallurgique (3).

7. Dispositif de coulée continue (1) selon l'une des revendications précédentes, **caractérisé en ce que** le dispositif de coulée continue (1) comprend un dispositif de coupe (7) pour couper les produits de fonderie métallurgique (3).

8. Dispositif de coulée continue (1) selon l'une des revendications précédentes, **caractérisé en ce que** le dispositif de coulée continue comprend une unité de commande (9) pour commander un dispositif de marquage (6) et/ou un dispositif de coupe (7) en fonction de données déterminées par l'unité d'évaluation (8).

9. Dispositif de coulée continue (1) selon l'une des revendications précédentes, **caractérisé en ce que** le dispositif de détection (5) pour détecter des défauts de surface et/ou des défauts à proximité de la surface comprend un capteur de température (52) pour mesurer la température des produits de fonderie métallurgique (3).

10. Procédé de coulée continue pour la production de produits de fonderie métallurgique (3), dans lequel les produits de fonderie métallurgique (3) quittent une lingotière (2) d'une coulée continue (1), le procédé comprenant un procédé pour détecter des défauts de surface et/ou des défauts à proximité de la surface,
comprenant les étapes suivantes
transmission d'un front d'onde ultrasonique au moyen d'un capteur EMAT stationnaire (50), dans lequel la direction et la profondeur de mise au point du front d'onde ultrasonique peuvent être réglées par voie électronique,
réception d'un signal ultrasonique qui est généré par la réflexion du front d'onde ultrasonique sur le produit de fonderie métallurgique (3) à examiner,
évaluation du signal ultrasonique reçu par rapport à des défauts de surface et/ou des défauts à proximité de la surface, dans lequel
des paramètres de réglage de la coulée continue (1) sont influencés en fonction de l'évaluation de manière à contrer les défauts de surface et/ou des défauts à proximité de la surface.

11. Procédé selon la revendication 10, **caractérisé en ce qu'**en fonction de l'évaluation, les défauts de surface et/ou des défauts à proximité de la surface des produits de fonderie métallurgique (3) sont marqués par un dispositif de marquage (6), et/ou les produits de fonderie métallurgique (3) sont découpés par une unité de coupe (7).

12. Procédé selon la revendication 10 ou 11, **caractérisé en ce que** la surface d'un produit de fonderie métallurgique (3) en face d'un examen aux ultrasons par le capteur EMAT (50) est nettoyée au moyen d'un dispositif de nettoyage (4) de la surface.

13. Procédé selon la revendication 10 à 12, **caractérisé en ce que** l'influence de la température sur les résultats ultrasoniques est prise en compte.

14. Procédé selon l'une des revendications 10 à 13, **caractérisé en ce qu'**il est vérifié par produit de fonderie, au moins une partie de sa surface totale.

15. Procédé selon l'une des revendications 10 à 14, **caractérisé en ce qu'**une évaluation de la qualité du produit de fonderie se fait automatiquement sur la base des résultats de l'inspection.
